(19)

Europäisches
Patentamt
European
Patent Office
Office européen
des brevets

(11) **EP 2 778 069 A1**

(12) **EUROPEAN PATENT APPLICATION**

(43) Date of publication:
**17.09.2014 Bulletin 2014/38**

(21) Application number: **14155824.7**

(22) Date of filing: **19.02.2014**

(51) Int Cl.:
*B64D 37/32* (2006.01)          *F02C 7/22* (2006.01)
*G01S 15/34* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **14.03.2013 GB 201304676**

(71) Applicant: **WESTON AEROSPACE LIMITED
Farnborough
Hampshire GU14 7PW (GB)**

(72) Inventor: **Kulczyk, Wojciech Konrad
Farnborough Hampshire GU14 7PW (GB)**

(74) Representative: **Vleck, Jan Montagu
Reddie & Grose LLP
16 Theobalds Road
London
WC1X 8PL (GB)**

(54) **Apparatus and method for detecting obstructions in pipes or channels**

(57)     Apparatus and method of monitoring for obstructions in a pipe or channel. The method comprising the steps of: (1) transmitting a wave into a first end of the pipe or channel from a transmitting transducer at a first known location relative to the pipe or channel, wherein the frequency f of the transmitted wave (13) varies in a predictable manner governed by the function f=f(t), where t is time; (2) noting the frequency $f_{tr}$ of the transmitted wave; (3) detecting any reflections of the transmitted wave travelling towards the first end of the pipe or channel at a receiving transducer at a second known location relative to the pipe or channel; (4) determining the frequency $f_{rec}$ of the reflected wave (14); (5) comparing the frequency $f_{tr}$ of the transmitted wave and the frequency $f_{rec}$ of the reflected wave, being transmitted from and being received by the respective transducers at the same time t; and 6)determining the distance L from the transmitting transducer to an obstruction and back to the receiving transducer from the difference Δf between the frequency $f_{tr}$ and the frequency $f_{rec}$.

Fig. 2

## Description

The present invention is concerned with method and apparatus for detecting obstructions in pipes or channels. Embodiments of the invention are particularly useful for detecting fast- forming and potentially critical obstructions formed in pipes or channels carrying fluid, by the solidification of the fluid being carried or the deposition of solids from that fluid. A particularly useful embodiment is to detect ice in an aircraft fuel line. It could also be used in any lines or pipes subjected to ice formation or freezing, or solid deposition. Such pipes might be the pipes carrying cooling water, for cooling nuclear reactors. It could also be used in pipes carrying fluids at high temperatures which could solidify such as pipes in chemical plant carrying liquids which might freeze at ambient temperature.

All aircraft fuel tanks contain some amount of water because it is practically impossible to remove it. This water under special flight conditions could change into ice taking into consideration that flight ambient temperature could be about -50 degree C. If this ice is formed in fuel pipes it could block fuel flow to the engines causing catastrophic failure. This type of event has been reported several times. A highly publicised incident of ice formation in an aircraft fuel line and subsequent engine failure occurred in 2008 when both engines of an aircraft lost power during landing at London Heathrow airport.

One known solution to prevent the formation of ice in aircraft fuel lines is to put additives in the fuel (Fuel System Icing Inhibitor - FSII) to prevent ice formation. FSII must be added in an exact proportion between 0.1% and 0.15% of fuel and must be uniformly distributed in fuel which is not easy to achieve. Many airports do not have the facilities to add FSII in the manner required for it to work effectively.

Another known solution is to place heaters around the fuel pipe, but with long fuel lines, low and varying ambient temperatures, this method requires large amount of energy and may also cause overheating and be a fire hazard. Since ice can form unexpectedly and suddenly, the heaters need to operate continuously and therefore use a lot of energy.

It is known to detect obstructions in pipes using ultrasonic waves. There are known ultrasonic systems for detecting an obstruction in a pipe such as those described by patent applications US 2005/0210960, US 2003/0033879, US 2007/280046, US,8,224,621, US,8,065,922, GB 2,191,860 and GB, 2,478,522. These systems use a pulse or resonance technique. The pulse technique is based on the transmitting of a single ultrasonic pulse and the measuring of the time of arrival of the reflected signal. From the difference between the departure and arrival times of a pulse signal, is calculated the distance to the obstruction. The pulse system requires a very wide frequency bandwidth to accommodate narrow pulses and therefore is sensitive to interference by electromagnetic waves which might be generated by aircraft radar, radio, engine ignition pulses and other electronic sources. The effect of random interference can be reduced using special signal processing arrangements if the blockage is detected not by a single pulse but by several repeated measurements. However, a problem associated with an arrangement which reduces the effect of random interference by taking repeated measurements is the time taken to repeat the measurements. This means that it can take too long to determine the formation of a potentially dangerous ice blockage or obstruction.

GB, 2, 478, 522 describes a resonance arrangement for detecting blockages in a pitot or other static tube of an aircraft. The system comprises a transmission transducer configured to transmit acoustic signals and a reception transducer configured to receive the signals from the transmission transducer after the signal has been altered by the transmission characteristics of the tube being monitored. The arrangement of GB, 2, 478, 522 is insufficiently sensitive to detect small ice particles and requires a long time to achieve and measure resonance frequency. Furthermore, it is unsuitable for use in monitoring an aircraft fuel line. The many bends and discontinuities in an aircraft fuel line mean that there exist many resonance frequencies. An additional complication is that these resonance frequencies vary with temperature.

Problems arise in using the arrangement of US 2007/280,046, US, 8,224,621, US, 8,065,922 for monitoring an aircraft fuel line because an ultrasonic pulse propagated in a pipe is reflected by its bends and fittings and reverberates or resonates. This means the wave is subject to multiple reflection. Since the receiver cannot distinguish between a pulse reflected from the obstruction and a pulse reflected from the fittings, the next pulse can be sent only when the propagated wave is sufficiently attenuated and its amplitude is very low. It might therefore be necessary to wait for the wave to travel at least ten times the distance from the transmitter to the obstruction and back to the receiver until its amplitude is sufficiently small.

For example, for a fuel line pipe 25 m long filled with kerosene, a transmitted pulse needs 38 msec to return to the receiving transducer. Because of reverberation (i.e. multiple reflection), one would have to wait at least 0.38 sec for the pulse amplitude to decrease before one can send another pulse and it not be affected by previous pulses. If one needs at least 10 pulses for the special signal processing necessary to compensate for interference, it means that one would have to wait more than 4 seconds to obtain a reliable indication of blockage. However ice formation could be very rapid and a response time of greater than 4 seconds is too long: it is sufficiently long for a potentially dangerous ice obstruction to form without detection.

The present invention provides a method of monitoring for obstructions in a pipe or channel, the method comprising the steps of: transmitting a wave into a first end of the pipe or channel from a transmitting transducer at a first known location relative to the pipe or channel, wherein the frequency f of the transmitted wave varies in a predictable manner governed by the function f=f(t), where t is time; noting the frequency $f_{tr}$ of the transmitted wave; detecting any reflections of the transmitted wave travelling towards the first end of the pipe or channel at a receiving transducer at a second known location relative to the pipe or channel; determining the frequency $f_{rec}$ of the reflected wave; comparing the frequency $f_{tr}$ of the transmitted wave and the frequency $f_{rec}$ of the reflected wave, being transmitted from and being received by the respective transducers at the same time t; and determining the distance L from the transmitting transducer to an obstruction and back to the receiving transducer from the difference $\Delta f$ between the frequency $f_{tr}$ and the frequency $f_{rec}$.

The present invention provides a new signal processing arrangement which enables fast detection of obstructions in pipes or channels.

Preferably the receiving and transmitting transducers are at the same location. This makes for a simple device which can be more easily retro-fitted to existing pipe or channel installations.

Preferably the frequency of the transmitted wave varies in a continuous manner. This simplifies the signal processing.

Alternatively the frequency varies in small discrete steps of, for example, 1/100 to 1/1000 of the frequency range.

Preferably the frequency of the transmitted wave varies in a linear manner between an upper frequency limit $f_2$ and a lower frequency limit $f_1$.

Preferably the rate of increase in frequency when the frequency increases from $f_1$ to $f_2$ is lower that the rate of decrease in frequency when the frequency decreases from $f_2$ to $f_1$.

Preferably as the transmitted frequency $f_{tr}$ increases from $f_1$ to $f_2$, the transmitted frequency at time t is given by

$$F_{tr}=Kt + f_1$$

where K is a constant.
and then the frequency $f_{tr}$ decreases from $f_2$ to $f_1$ rapidly or substantially instantaneously.
This makes for simple and effective signal processing.

Preferably the distance L from the point where the transmission frequency is determined to the obstruction and back to the point where the reflected frequency is determined is represented by

$$L=\Delta f \, V/K$$

when $f_{tr}$ is greater than $f_{rec}$ and where V is the speed of the wave in the medium in the pipe or channel;
or by $L=(f_2 - f_2 - \Delta f)V/K$ when $f_{rec}$ is greater than $f_{tr}$.

Preferably the transmitted wave is a sinusoidal wave whose frequency varies in a predictable manner. Narrow band filters can be used for sinusoidal waves, frequency comparison is easier and transducers work better with sinusoidal waves.

Alternatively, the transmitted wave is a triangular or square wave whose frequency varies in a predictable manner. Square waves signals are relatively easy to process in a digital signal processing system. Preferably a temperature sensor is used to compensate for the variation in the speed of waves with temperature.

Preferably an alarm is activated when an obstruction is detected.

Preferably the determined location is used to control one or more heaters.

Preferably the method is used for detecting the formation of solid particles in a fluid in the pipe or channel.

The method is particularly useful for detecting the formation of ice in an aircraft fuel line.

Embodiments of the invention also include apparatus for implementing the inventive method and its preferred elements.

A preferred embodiment will now be described by way of non-limiting example, with reference to the attached figures in which:

Figure 1 is a schematic illustration of how apparatus embodying the invention could be used as part of a system for controlling or warning of ice formation in an aircraft fuel line;

Figure 2 is a schematic illustration of an aircraft fuel line including apparatus embodying the invention; and

Figure 3 is a diagram illustrating the frequency at time t of transmitted signal (solid line) and the frequency a received signal at time t (dashed line), (i.e. obstruction) associated with an embodiment of the invention.

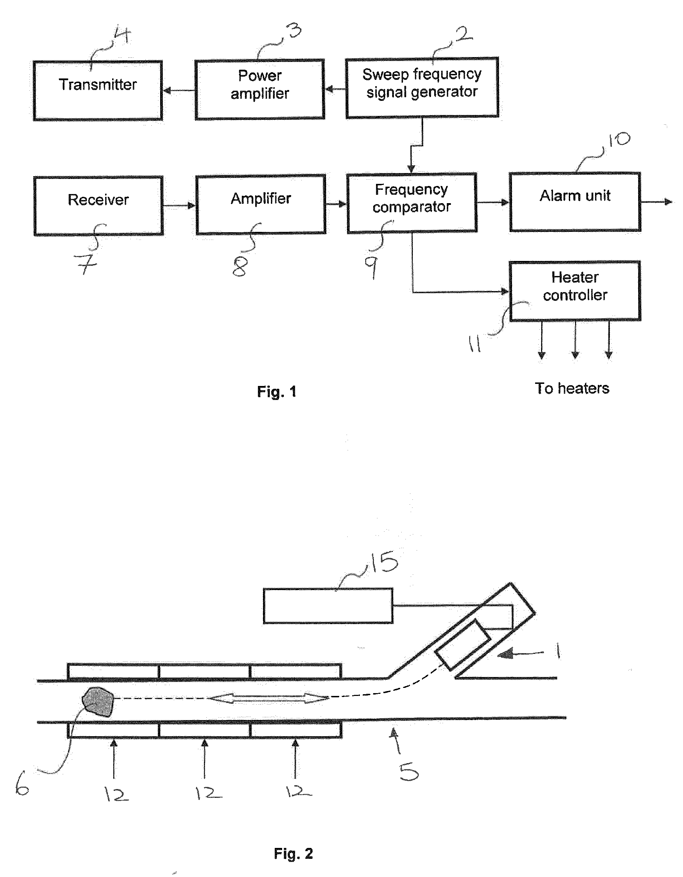

An ice detecting system 1 (see figure 1) consists of a sweep frequency signal generator 2 providing a signal having a variable frequency. This signal is sent to a power amplifier 3 which drives a transmitting transducer 4 which in turn generates ultrasonic waves. The ultrasonic waves travel in the fuel line pipe 5 and when they are reflected by an obstruction 6 (for example ice) (see figure 2) they return to a receiver 7 located alongside or with the transmitter 4. This patent application describes a transmitter separate from the receiver. However, the receiver and transmitter may be a single transducer which can both transmit and receive appropriate signals (e.g. ultrasonic signals).

The signal from the receiver is amplified by a receiver of amplifier 8 and sent to a frequency comparator 9 which compares the received signal frequency $f_{rec}$ with the transmitted signal frequency $f_{tr}$ and then calculates the distance L from the transmitter 4 to the obstruction 6 and back to the receiver 7, and hence the distance $L_o$ (L=2$L_o$) from the transmitter/receiver location. When ice or some other obstruction is detected in the fuel line 5, the ice detector unit sends a signal to the alarm unit 10 to inform the pilot about the incident. At the same time it sends a signal to a heater control unit 11 which calculates which of the heaters 12 around the fuel line 5 (see figure 2) should be switched on so that heat is supplied to the portion of the line which is at the determined distance L from the transmitter/receiver. When the ice is removed by the action of the selected heater or heaters, there will no longer be a reflected signal from that portion of the fuel line and the heater control unit 11 will switch the heater or heaters 11 off. All the data processing functioning functions can be performed by a single microprocessor 15.

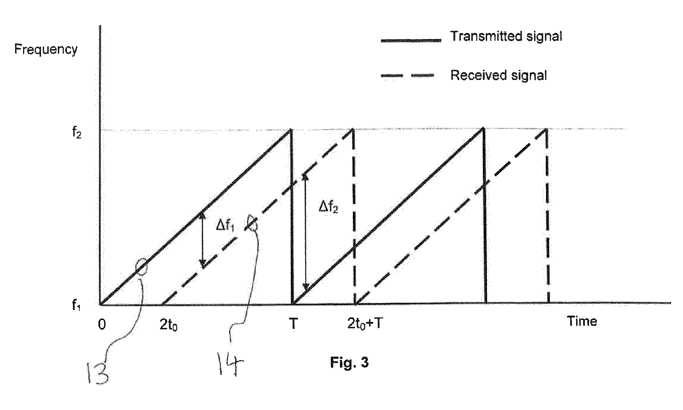

The sweep frequency signal generator 2 (see figure 1) generates a continuous sinusoidal wave having a variable frequency. This is amplified before driving the transmitter 4 which generates and transmits a corresponding ultrasonic wave of varying frequency. The transmitter 4 transmits an ultrasonic wave whose frequency varies as a continuous sinusoidal wave signal having variable frequency (see figure 3). The signal frequency changes between a low frequency $f_1$ and a high frequency $f_2$ during a linear sweep lasting T seconds. The sweep could have a saw tooth shape (i.e. with an increasing ramp and then vertical decrease) as shown in figure 3, or increasing and decreasing ramps (not shown). The important thing is that the frequency varies in a known and predictable manner.

The sweep time T should be greater than or equal to the maximum possible distance L. This is governed by the length of the fuel line which is known. An obstruction in the fuel line cannot be further away than the end of the fuel line distal from the ice detection system 1. In a preferred embodiment the frequency varies in a manner as shown, for example, in figure 3 where the measured transmitted signal 13 is shown in solid lines and the measured received signal 14 in dashed lines. It is also possible to have frequency varying in a non-linear manner but the calculations would be much more complex. The transmitted wave is reflected by any obstruction and picked up by a signal receiver located alongside or with the signal transmitter.

For a sound or ultrasonic wave, its velocity V is give by:

$$\text{Sound velocity } V = f \times \lambda,$$

where f is the frequency of the wave, and A is the wavelength of the wave.

In order to detect a particle line obstruction 6 having diameter, d the signal frequency f should be:

$$f \geq V/d$$

In kerosene (i.e. aircraft fuel) $V_k$ = 1324 m/sec With reference to figures 2 and 3, where $L_o$ is the distance from the transmitter 4 to obstruction 6 (and also the distance from the obstruction 6 to the receiver 7), t is time, $t_o$ is the time it takes for the ultrasonic wave to travel from the transmitter to the obstruction

$$t_o = L_o/V \qquad (1)$$

The sweep time, T of the signal of varying frequency is given by:

$$T \geq 2L_{max}/V_k \qquad (2)$$

where $L_{max}$ is the maximum range of the possible distance from the transmitter to the obstruction (and therefore 2 $L_{max}$ is the maximum possible distance from the transmitter to the obstruction and back to the receiver).

With reference to figure 3, the frequency change slope K for the increase in frequency from $f_1$ to $f_2$ is given by:

$$K = (f_2 - f_1)/T \ [\text{Hz/sec}] \qquad (3)$$

where $f_1$ is the minimum sweep frequency and $f_2$ is the maximum sweep frequency.

The instantaneous transmitted frequency $f_{tr}$ at time t is given by:

$$f_{tr} = K t + f_1 \qquad (4)$$

and the instantaneous receiving frequency $f_{rec}$ is given by:

$$f_{rec} = K (t - 2t_o) + f_1 \qquad (5)$$

The frequency difference $\Delta f_1$ between the transmitted and received signal when the frequency of the transmitted signal $f_{tr}$ is greater than the frequency of the reflected and received signal $f_{rec}$ is then given by:

$$\Delta f_1 = f_{tr} - f_{rec} = 2Kt_o \qquad (6)$$

Therefore, where the distance to obstruction is $L_o$, for t between $2t_o$ and T

$$L_o = \Delta f_1 \, V/2K \qquad (7)$$

and the frequency difference $\Delta f_2$ between the received and transmitted signal when the frequency of the transmitted signal $f_{tr}$ is lower than the frequency of the reflected and received signal $f_{rec}$

$$\Delta f_2 = f_{rec} - f_{tr} = (T - 2\,t_o)K \qquad (8)$$

Such that the distance to obstruction, $L_o$ for t between T and $2t_o + T$ is given by

$$L_o = (f_2 - f_1 - \Delta f_2) \, V/2K \qquad (9)$$

Reflections from bends and/or steps in the fuel line can be removed by frequency filtering as they are permanent (ie always reflected from the same locations as the bends and/or steps do not move).

In summary of the equations set out above, the received signal travels a distance $L_o$ to an obstruction (and a distance $L_o$ back) and after reflection is detected by the receiver after time $2\,t_o$. The signal frequency of the received signal is represented by the dashed line in figure 3. The difference between the two transmitted and received frequencies at a particular time depends on the travelling time $t_o$ and the distance to the obstruction, $L_o$. The difference between the transmitted frequency $f_{tr}$ and the received signal frequencies $f_{rec}$ is given by equations 6 and 8 above and the distance $L_o$ to the ice obstruction can be calculated using equations 7 and 9 above.

Using a sine wave signal requires only a narrow band operation, and therefore a narrow band filter can reject most of the noise generated by a transmitted interfering pulse. This means that a system of the type described above and in connection with figures 1 to 3 using a sine wave signal has a relatively low sensitivity to interference and interfering pulses, and distance calculation can be based on the analysis of one signal frequency sweep.

Example

For a fuel pipe 25 meters long filled with kerosene, the sweep time T of the signal of varying frequency should be longer than 38 msec, but should be long enough for a wave to be attenuated, say 0.38 sec. The sweep time, T could be shorter, but the start of a new sweep could be delayed until the propagating waves are attenuated.

To detect small ice particles the ultrasonic wavelength, $\lambda$ should be smaller than the likely dimension of the particles the system is to detect. Normally frequency of the signal would be in the range 100 kHz to 5 MHz, and the frequency sweep range would be between 1% and 10% of the signal frequency. It is important that small ice particles are detected before they reach a filter. To detect e.g. a 1 mm particle the signal frequency should be higher than 1.3 MHz.

**Claims**

1. A method of monitoring for obstructions in a pipe or channel, the method comprising the steps of:

   transmitting a wave into a first end of the pipe or channel from a transmitting transducer at a first known location relative to the pipe or channel, wherein the frequency f of the transmitted wave varies in a predictable manner governed by the function f=f(t), where t is time;
   noting the frequency $f_{tr}$ of the transmitted wave;
   detecting any reflections of the transmitted wave travelling towards the first end of the pipe or channel at a receiving transducer at a second known location relative to the pipe or channel;
   determining the frequency $f_{rec}$ of the reflected wave;
   comparing the frequency $f_{tr}$ of the transmitted wave and the frequency $f_{rec}$ of the reflected wave, being transmitted from and being received by the respective transducers at the same time t; and
   determining the distance L from the transmitting transducer to an obstruction and back to the receiving transducer from the difference $\Delta f$ between the frequency $f_{tr}$ and the frequency $f_{rec}$.

2. A method according to claim 1 wherein the receiving and transmitting transducers are at the same location.

3. A method according to any preceding claim wherein the frequency of the transmitted wave varies in a continuous manner.

4. A method according to any preceding claim wherein the frequency of the transmitted wave varies in a linear manner between an upper frequency limit $f_2$ and a lower frequency limit $f_1$.

5. A method according to claim 4 wherein the rate of increase in frequency when the frequency increases

from $f_1$ to $f_2$ is lower that the rate of decrease in frequency when the frequency decreases from $f_2$ to $f_1$.

6. A method according to claim 5 wherein as the frequency $f_{tr}$ of the transmitted wave increases from $f_1$ to $f_2$, the transmitted frequency at time t after it is at $f_1$ is given by

$$f_{tr}=Kt + f_1$$

where K is a constant, and then the frequency $f_{tr}$ decreases from $f_2$ to $f_1$ rapidly or substantially immediately.

7. A method according to claim 6 wherein the distance L is represented by

$$L=\Delta f \, V/K$$

when $f_{tr}$ is greater than $f_{rec}$ and where V is the speed of the wave in the medium in the pipe or channel; or by $L=(f_2-f_2-\Delta f)V/K$ when $f_{rec}$ is greater than $f_{tr}$.

8. A method according to any preceding claim wherein the transmitted wave is a sinusoidal wave whose frequency varies in a predictable manner.

9. A method according to any of claims 1 to 7 wherein the transmitted wave is a square wave whose frequencies varies in a predictable manner.

10. A method according to any preceding claim including measuring the temperature of the medium in the pipe or channel and using that temperature measurement to compensate for variations with temperature in the speed of waves through a medium.

11. A method according to any preceding claim including a step of frequency filtering the frequency $f_{rec}$ of the reflected wave to remove reflections from permanent features of the pipe or channel such as bends and/or steps in the pipe or channel.

12. A method according to any preceding claim where the determined location is used to control one or more heaters to heat a selected portion of the pipe or channel.

13. A method according to any preceding claim for detecting the formation of solid particles in a fluid in the pipe or channel.

14. A method according to any preceding claim for detecting the formation of ice in an aircraft fuel line.

15. Apparatus including means for carrying out the method of claims 1 to 14.

**Fig. 1**

Transmitter · Power amplifier · Sweep frequency signal generator · Receiver · Amplifier · Frequency comparator · Alarm unit · Heater controller · To heaters

**Fig. 2**

Fig. 3

Europäisches
Patentamt
European
Patent Office
Office européen
des brevets

# EUROPEAN SEARCH REPORT

Application Number

EP 14 15 5824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/003963 A2 (NOLTE LUTZ [CH]) 13 January 2011 (2011-01-13) * pages 6-10; figure 1 * ----- | 1-11, 13-15 | INV. B64D37/32 F02C7/22 G01S15/34 |
| A | US 2007/280046 A1 (PEREZ JASON R [US]) 6 December 2007 (2007-12-06) * paragraphs [0014], [0033]; figures 1-5 * ----- | 1-15 | |
| A | US 2003/033879 A1 (ADEWUMI MICHAEL A [US] ET AL) 20 February 2003 (2003-02-20) * the whole document * ----- | 1-15 | |

TECHNICAL FIELDS
SEARCHED    (IPC)

B64D
F02C
G01S

The present search report has been drawn up for all claims

| Place of search | Date of completion of the search | Examiner |
|---|---|---|
| Munich | 27 June 2014 | Kern, Olivier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 14 15 5824

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2014

| Patent document cited in search report | Publication date | Patent family member(s) | Publication date |
|---|---|---|---|
| WO 2011003963 A2 | 13-01-2011 | NONE | |
| US 2007280046 A1 | 06-12-2007 | NONE | |
| US 2003033879 A1 | 20-02-2003 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050210960 A
- US 20030033879 A
- US 2007280046 A
- US 8224621 B

- US 8065922 B
- GB 2191860 A
- GB 2478522 A